# EUROPÄISCHE PATENTSCHRIFT

(11) **EP 1 248 199 B1**
(45) Veröffentlichungstag und Bekanntmachung des Hinweises auf die Patenterteilung: **21.12.2011**
(21) Anmeldenummer: 02006863.1
(22) Anmeldetag: 26.03.2002
(51) Int. Cl.: G06F 12/02

(54) **Schnittstelle für eine Speichereinrichtung**
Interface for a memory device
Interface pour un dispositif de mémoire

(30) Priorität: 04.04.2001 DE 10116863
(43) Veröffentlichungstag der Anmeldung: 09.10.2002
(73) Patentinhaber: Infineon Technologies AG, 85579 Neubiberg (DE)
(72) Erfinder: Barrenscheen, Jens, Dr., 81669 München (DE); Herz, Karl, 81735 München (DE)
(74) Vertreter: Repkow, Ines

(56) Entgegenhaltungen:
- US-A- 4 292 674
- US-A- 5 007 011
- "HIGH PERFORMANCE MICROPROCESSOR MEMORY SYSTEM" IBM TECHNICAL DISCLOSURE BULLETIN, IBM CORP. NEW YORK, US, Bd. 31, Nr. 3, 1. August 1988 (1988-08-01), Seiten 303-306, XP000028851 ISSN: 0018-8689

## Beschreibung

Die vorliegende Erfindung betrifft eine Vorrichtung gemäß dem Oberbegriff des Patentanspruchs 1, d.h. eine Schnittstelle zwischen einer Speichereinrichtung und einer Daten aus der Speichereinrichtung anfordernden Einrichtung, wobei die Schnittstelle dafür sorgt, daß die angeforderten Daten aus der Speichereinrichtung ausgelesen und an die die Daten anfordernde Einrichtung weitergeleitet werden.

Die auszulesende Speichereinrichtung kann beispielsweise ein sogenannter Flash-Speicher sein.

Bei Flash-Speichern dauert es im allgemeinen relativ lange, bis die von ihnen angeforderten Daten ausgegeben werden. Die Folge hiervon ist, daß normalerweise mit Wartezyklen (wait states) gearbeitet werden muß. Dies ist bekanntlich ein Nachteil.

Dieses Problem tritt noch ausgeprägter auf, wenn die angeforderten Daten vor der Ausgabe an die die Daten anfordernde Einrichtung einer Fehlerkorrektur unterzogen werden.

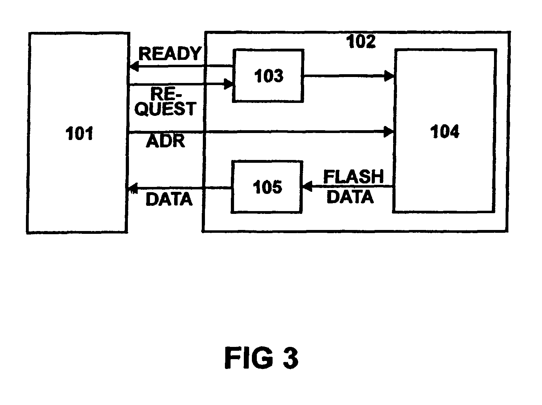

Eine Anordnung, bei welcher dies der Fall ist, ist in Figur 3 dargestellt.

Die in der Figur 3 dargestellte Anordnung ist Teil eines Mikrocontrollers und enthält eine CPU 101 und ein Flash-Modul 102, wobei das Flash-Modul 102 einen Wait State Generator 103, einen Flash-Speicher 104, und eine Fehlerkorrekturlogik 105 aufweist.

Der Wait State Generator 103 und die Fehlerkorrekturlogik 105 bilden eine Schnittstelle, welche dafür sorgt, daß von der CPU 101 angeforderte Daten aus dem Flash-Speicher 104 ausgelesen und an die CPU 101 weitergeleitet werden. Die dabei ablaufenden Vorgänge werden im folgenden näher beschrieben.

Die CPU 101 fordert bei Bedarf von ihr benötigte Daten aus dem Flash-Modul 102 an, wobei diese Daten Code-Daten, d.h. auszuführende Befehle repräsentierende Daten, oder zur Befehlsausführung benötigte Daten wie beispielsweise Operanden oder Daten, deren Weiterleitung der CPU durch einen gerade ausgeführten Befehl befohlen wurde, sein können.

Das Anfordern der Daten durch die CPU 101 erfolgt dadurch, daß die CPU 101 an das Flash-Modul 102 eine Adresse ADR, welche angibt, an welcher Stelle die angeforderten Daten innerhalb des Flash-Speichers 104 gespeichert sind, und ein Leseanforderungssignal REQUEST ausgibt. Die Adresse ADR wird direkt dem Flash-Speicher 104 zugeführt, und das Leseanforderungssignal REQUEST dem Wait State Generator 103. Wenn der Wait State Generator 103 das Leseanforderungssignal REQUEST erhält, erzeugt er ein Lesesignal READ und führt dieses dem Flash-Speicher 104 zu. Der Flash-Speicher 104 liest im Ansprechen auf den Empfang des Lesesignals READ die unter der Adresse ADR gespeicherten Daten aus und gibt diese Daten FLASH DATA an die Fehlerkorrekturlogik 105 aus. Die Fehlerkorrekturlogik 105 überprüft die Daten auf Fehlerfreiheit und korrigiert sie bei Bedarf; Möglichkeiten zur Fehlerkorrektur sind bekannt, so daß auf die Beschreibung weiterer Einzelheiten hierzu verzichtet werden kann. Wenn die Fehlerkorrekturlogik 105 die Fehlerkorrektur beendet hat, signalisiert sie dies dem Wait State Generator 103, welcher daraufhin der CPU 101 durch ein Ready-Signal READY signalisiert, daß die von der CPU angeforderten Daten nunmehr verfügbar sind. Die CPU liest daraufhin die von der Fehlerkorrekturlogik 105 ausgegebenen Daten DATA ein. Danach können sich die beschriebenen Vorgänge wiederholen.

Bedingt durch den Umstand, daß das Auslesen von Daten aus dem Flash-Speicher 104 relativ lange dauert, und daß die Überprüfung der Daten auf Fehler zusätzlich eine gewisse Zeit in Anspruch nimmt, dauert es relativ lange, bis die CPU 101 die von ihr angeforderten Daten erhält. Dies ist verständlicherweise ein Nachteil.

Das Dokument US5007011 offenbart eine Schnittstelle, die dazu ausgelegt ist, zwischen einer Speichereinrichtung und einer Daten aus der Speichereinrichtung anfordernden Einrichtung angeordnet zu werden, wobei die Schnittstelle dazu ausgelegt ist, dafür zu sorgen, dass die angeforderten Daten aus der Speichereinrichtung ausgelesen und an die die Daten anfordernde Einrichtung weitergeleitet werden. Die Schnittstelle ist dazu ausgelegt, dann, wenn nach einem Auslesen von Daten aus der Speichereinrichtung keine weiteren Anforderungen seitens der Daten anfordernden Einrichtung vorliegen, die zuvor zum Auslesen von Daten aus der Speichereinrichtung verwendete Adresse zu modifizieren und das Auslesen der in der Speichereinrichtung unter dieser Adresse gespeicherten Daten zu veranlassen.

Ähnliche Schnittstellen sind auch aus der Dokumente US4292674 und XP000028851 bekannt.

Der vorliegenden Erfindung liegt daher die Aufgabe zugrunde, eine Möglichkeit zu finden, durch welche die zwischen der Anforderung von Daten aus einer Speichereinrichtung und dem Erhalt dieser Daten vergehende Zeit verringert werden kann.

Diese Aufgabe wird durch eine Schnittstelle mit den in Patentanspruch 1 beanspruchten Merkmalen gelöst.

Das erfindungsgemäße Schnittstelle zeichnet sich dadurch aus,
- daß sie dann, wenn nach einem Auslesen von Daten aus der Speichereinrichtung keine weiteren Anforderungen seitens der Daten anfordernden Einrichtung vorliegen, die zuvor zum Auslesen von Daten aus der Speichereinrichtung verwendete Adresse modifiziert und das Auslesen der in der Speichereinrichtung unter dieser Adresse gespeicherten Daten veranlaßt, und/oder
- daß sie eine in ihr festgelegte Zeit nach dem Anstoßen des Auslesens die von der Speichereinrichtung ausgegebenen Daten übernimmt und/oder den nächsten Speicherzugriff startet..

Die erstgenannte Schnittstelle ermöglicht es, daß der Lesezugriff, der auf die Speichereinrichtung durchgeführt werden muß, um die von der Daten anfordernden Einrichtung angeforderten Daten aus der Speichereinrichtung auszulesen, zum Zeitpunkt der Anforderung der Daten schon begonnen oder sogar schon durchgeführt wurde.

Die zweitgenannte Schnittstelle ermöglicht es, daß Lesezugriffe auf die Speichereinrichtung nicht so lange dauern wie es normalerweise (ohne die beanspruchte Besonderheit) der Fall ist.

Diese Besonderheiten ermöglichen es sowohl alleine und erst recht im Kombination miteinander, daß die Zeit, die zwischen der Anforderung von Daten durch eine Daten anfordernde Einrichtung aus einer Speichereinrichtung, und der Bereitstellung dieser Daten vergeht, auf sehr einfache Art und Weise und ohne Veränderung der Speichereinrichtung selbst erheblich reduzierbar ist.

Vorteilhafte Weiterbildungen der Erfindung sind den Unteransprüchen, der folgenden Beschreibung und den Figuren entnehmbar.

Die Erfindung wird nachfolgend anhand von Ausführungsbeispielen unter Bezugnahme auf die Figuren näher erläutert. Es zeigen
- Figur 1: ein Anordnung, durch welche eine erste Möglichkeit zur Beschleunigung des Zugriffes auf eine Speichereinrichtung realisiert ist,
- Figur 2: ein Anordnung, durch welche die erste Möglichkeit und zusätzlich eine zweite Möglichkeit zur Beschleunigung des Zugriffes auf eine Speichereinrichtung realisiert ist, und
- Figur 3: eine herkömmliche Anordnung für Zugriffe auf eine Speichereinrichtung.

Die erwähnte Beschleunigung des Zugriffs auf die Speichereinrichtung wird durch eine zwischen der Speichereinrichtung und der aus dieser Daten anfordernden Einrichtung vorgesehene Schnittstelle ermöglicht.

Die im folgenden näher beschriebenen Schnittstellen beschleunigen den Zugriff einer CPU auf einen Flash-Speicher. Es sei bereits an dieser Stelle darauf hingewiesen, daß die beschriebenen Schnittstellen auch anderweitig einsetzbar sind; sowohl die Speichereinrichtung als auch die Daten aus dieser Speichereinrichtung anfordernde Einrichtung können unabhängig voneinander auch beliebige andere Einrichtungen sein.

Die in den Figuren gezeigten Anordnungen sind im betrachteten Beispiele Bestandteil eines Mikrocontrollers. Auch hierauf besteht keine Einschränkung. Die Anordnungen können auch Bestandteil einer anderen Einrichtung sein, und die einzelnen Komponenten der Anordnungen können auch in verschiedenen Bausteinen untergebracht sein.

Die aus der Speichereinrichtung ausgelesenen Daten werden im betrachteten Beispiel vor deren Ausgabe an die die Daten anfordernde Einrichtung einer Fehlerkorrektur unterzogen. Auch hierauf besteht keine Einschränkung. Durch die im folgenden beschriebenen Besonderheiten der betrachteten Anordnungen lassen sich auch Vorteile erzielen, wenn keine Fehlerkorrektur durchgeführt wird.

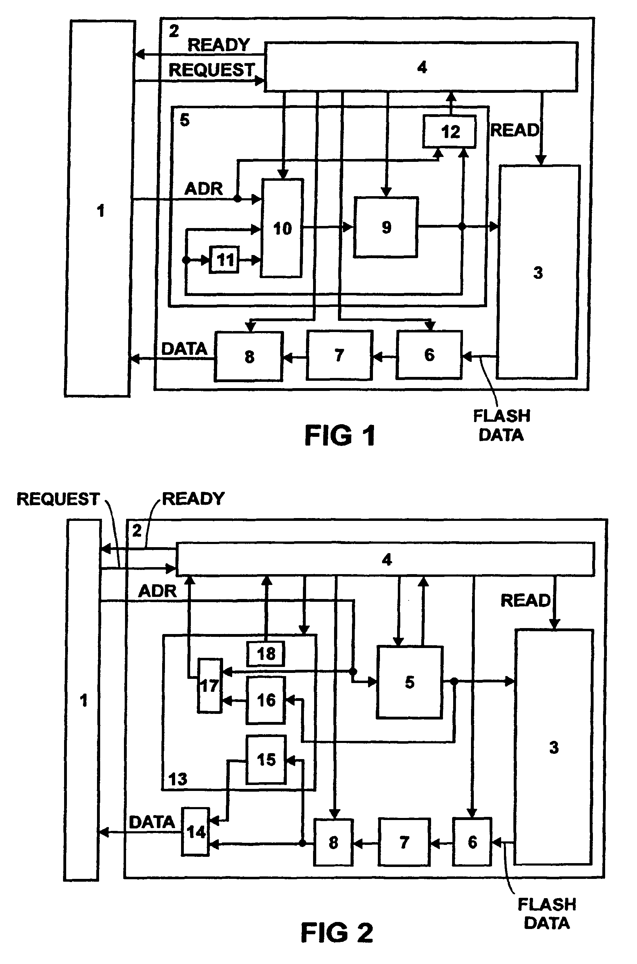

Die Figur 1 zeigt eine Anordnung, durch welche eine erste Möglichkeit für einen beschleunigten Zugriff der CPU auf den Flash-Speicher realisiert ist.

Die in der Figur 1 gezeigte Anordnung enthält eine CPU 1 und ein Flash-Modul 2, wobei das Flash-Modul 2 einen Flash-Speicher 3, eine Steuereinheit 4, eine Adreßeinheit 5, ein erstes Datenregister 6, eine Fehlerkorrekturlogik 7, und ein zweites Datenregister 8 enthält, und wobei die Adreßeinheit 5 ein Adreßregister 9, einen Multiplexer 10, einen Inkrementierer 11, und einen Vergleicher 12 enthält.

Die Komponenten 4 bis 12 bilden die erwähnte Schnittstelle zwischen der CPU 1 und dem Flash-Speicher 3.

Die Kommunikation zwischen der CPU 1 und dem Flash-Modul 2 läuft wie bei der in der Figur 3 gezeigten Anordnung ab. D.h., wenn die CPU 1 aus dem Flash-Speicher 3 Daten benötigt, gibt sie an das Flash-Modul 2 ein Leseanforderungssignal REQUEST und eine Adresse ADR aus, und erhält die CPU 1 vom Flash-Modul 2 ein Ready-Signal READY und die von der CPU 1 angeforderten Daten DATA.

Die von der CPU 1 ausgegebene Adresse ADR wird hier jedoch nicht dem Flash-Speicher 3, sondern dem Multiplexer 10 zugeführt, welcher diese Adresse oder eine andere Adresse über das Adreßregister 9 an den Flash-Speicher 3 weiterleitet.

Das Leseanforderungssignal REQUEST wird der Steuereinheit 4 zugeführt, und diese erzeugt ein an den Flash-Speicher 3 ausgegebenes Lesesignal READ.

Trotz der vorhandenen Unterschiede kann das Flash-Modul 2 so arbeiten wie das Flash-Modul 102 der eingangs unter Bezugnahme auf die Figur 3 beschriebene Anordnung. D.h.,
- die von der CPU 1 ausgegebene Adresse ADR kann (über den Multiplexer 10 und das Adreßregister 9) dem Flash-Speicher 3 zugeführt werden, und
- das von der CPU 1 ausgegebene Leseanforderungssignal REQUEST kann zum Anlaß genommen werden, ein Lesesignal READ zu erzeugen und dem Flash-Speicher 3 zuzuführen,

woraufhin der Flash-Speicher 3 die unter der Adresse ADR gespeicherten Daten ausliest und über das erste Datenregister 6 an die Fehlerkorrekturlogik 7 ausgibt, und diese die ihr zugeführten Daten einer Fehlerüberprüfung und Fehlerkorrektur unterzieht und über das zweite Datenregister 8 an die CPU 1 ausgibt, welche diese Daten nach dem Erhalt des Ready-Signals READY einliest.

Die Übernahme der vom Flash-Speicher 3 ausgegebenen Daten FLASH DATA in das erste Datenregister 6 erfolgt, sobald die aus dem Flash-Speicher 3 auszulesenden Daten zur Abholung bereitstehen; der entsprechende Zeitpunkt wird dem ersten Datenregister 6 über eine Steuerleitung von der Steuereinheit 4 vorgegeben.

Im wesentlichen gleichzeitig werden die von der Fehlerkorrekturlogik 7 ausgegebenen Daten in das zweite Datenregister 8 übernommen; auch dieser Vorgang wird über eine entsprechende Steuerleitung von der Steuereinheit 4 gesteuert.

Ebenfalls genau oder ungefähr zu diesem Zeitpunkt wird von der Steuereinheit 4 ein Ready-Signal READY an die CPU 1 ausgegeben, woraufhin diese die vom zweiten Datenregister 8 gespeicherten und ausgegebenen Daten übernimmt.

Der Zeitpunkt, zu welchem die Übernahme von Daten in das erste Datenregister 6 und in das zweite Datenregister 8, sowie die Ausgabe des Ready-Signals READY erfolgen, kann in Abhängigkeit von einem Ready-Signal festgelegt werden, welches der Flash-Speicher 3 ausgibt, wenn die von ihm auszulesenden und auszugebenden Daten zur Abholung bereitstehen.

Im betrachteten Beispiel erfolgt die Festlegung dieses Zeitpunktes allerdings anders. Vorliegend ist in der Steuereinheit 3 eingestellt, wie lange, beispielsweise wie viele Taktperioden, es vom Anlegen des Lesesignals READ an dauert, bis die aus dem Flash-Speicher 3 auszulesenden Daten übernommen werden können. Die Steuereinheit 3 veranlaßt dann jeweils nach Ablauf dieser Zeit die Übernahme der aus dem Flash-Speicher 3 ausgegebenen Daten in das erste Datenregister 6 und die zeitgleich auszuführenden Aktionen. Dadurch entfällt die Notwendigkeit, das Auftreten eines vom Flash-Speicher 3 ausgegebenen Ready-Signals zu überwachen. Dies hat den positiven Effekt, daß die vom Flash-Speicher 3 ausgegebenen Daten zu einem früheren Zeitpunkt übernommen werden können als es der Fall wäre, wenn der Übernahmezeitpunkt vom Auftreten des Ready-Signals abhängig gemacht werden würde.

Die Steuereinheit 4 sorgt ferner dafür, daß im wesentlich zeitgleich mit dem Abschluß eines Lesevorganges gleich der nächste Lesevorgang begonnen wird. Vorzugsweise werden bereits zu dem Zeitpunkt, zu welchem die aus dem Flash-Speicher 3 ausgegebenen Daten in das erste Datenregister 6 übernommen werden, eine neue Adresse und ein weiteres Lesesignal READ an den Flash-Speicher 3 angelegt.

Welche Adresse diese neu angelegte Adresse ist, hängt davon ab, ob die CPU 1 zwischenzeitlich eine neue Leseanforderung (eine neue Adresse ADR und ein weiteres Leseanforderungssignal REQUEST) ausgegeben hat.

Wenn dies der Fall ist, wird diese neue Adresse ADR dem Flash-Speicher 3 zugeführt. Beim Auslesen der unter dieser Adresse gespeicherten Daten wiederholen sich die vorstehend beschriebenen Vorgänge.

In der Adreßeinheit 5 sind Vorkehrungen getroffen, durch welche sichergestellt wird, daß sich die dem Flash-Speicher 3 zugeführte Adresse nicht ändert, so lange das Auslesen der unter dieser Adresse gespeicherten Daten nicht beendet ist.

Dies erfolgt im betrachteten Beispiel dadurch, daß die dem Flash-Speicher 3 zugeführte (vom Adreßregister 9 ausgegebene) Adresse einem zweiten Eingangsanschluß des Multiplexers 10 zugeführt wird, und daß der Multiplexer 10 die an seinem zweiten Eingangsanschluß anliegende Adresse durchschaltet, sobald die vom Adreßregister 9 ausgegebene Adresse die zum betreffenden Zeitpunkt an den Flash-Speicher anzulegende Adresse ist.

Wenn zu dem Zeitpunkt, zu welchem ein neuer Lesevorgang gestartet werden kann, keine noch abzuarbeitende Leseanforderung seitens der CPU 1 vorliegt, leitet das Flash-Modul 2 selbständig, d.h. ohne eine entsprechende Anforderung seitens der CPU 1 das Auslesen von Daten aus dem Flash-Speicher 3 ein.

In diesem Fall wird dem Flash-Speicher 3 eine vom Flash-Modul 2, genauer gesagt eine von der Adreßeinheit 5 generierte Adresse und ein weiteres Lesesignal READ zugeführt, wodurch der Flash-Speicher 3 die unter der neuen Adresse gespeicherten Daten ausliest und ausgibt.

Als neue Adresse wird im betrachteten Beispiel die Adresse verwendet, die der zuletzt verwendeten Adresse folgt. Dem liegt die Erkenntnis zugrunde, daß es sehr häufig vorkommt, daß die CPU 1 von unter aufeinanderfolgenden Adressen gespeicherte Daten benötigt. Dies gilt insbesondere, aber nicht ausschließlich dann, wenn die auszulesenden Daten die Befehle des von der CPU 1 abzuarbeitenden Programms repräsentieren. Es sei bereits an dieser Stelle darauf hingewiesen, daß die neue Adresse nicht die Folgeadresse der zuletzt verwendeten Adresse sein muß. Die neue Adresse kann auch eine beliebige andere Adresse sein; vorzugsweise handelt es sich jedoch um eine Adresse, deren Auslesen die CPU 1 durch die nächste Leseanforderung am wahrscheinlichsten veranlassen wird.

Die Generierung der neuen Adresse durch die Adreßeinheit 5 erfolgt im betrachteten Beispiel unter Verwendung des Inkrementierers 11 und des Multiplexers 10. Der Inkrementierer 11 inkrementiert die gerade dem Flash-Speicher 3 zugeführte (vom Adreßregister 9 ausgegebene) Adresse und führt sie einem dritten Eingangsanschluß des Multiplexers 10 zu.

Das Anlegen einer neuen Adresse an den Flash-Speicher 3 erfolgt nun so, daß der Multiplexer 10 dann, wenn dem Flash-Speicher eine neue Adresse zuzuführen ist, zunächst die an seinem dritten Eingangsanschluß anliegende, also die durch den Inkrementierer 11 inkrementierte Adresse zum Adreßregister 9 durchschaltet, und dann, wenn die neue Adresse in das Adreßregister 9 übernommen wurde und an den Flash-Speicher 3 ausgegeben wird, die am zweiten Eingangsanschluß des Multiplexers 10 anliegende, also die gerade vom Adreßregister 9 an den Flash-Speicher 3 ausgegebene Adresse durchschaltet.

Die Zeitpunkte, zu welchen der Multiplexer 10 umschaltet, und zu welchen das Adreßregister 9 die ihm zugeführten Adressen übernimmt, werden über entsprechenden Steuerleitungen von der Steuereinheit 4 bestimmt.

Das Auslesen der Daten, die unter der dem Flash-Speicher 3 zugeführten Adresse gespeichert sind, erfolgt danach genau so wie es der Fall ist, wenn dem Flash-Speicher 3 eine von der CPU 1 ausgegebene Adresse ADR zugeführt werden würde. Insbesondere sorgt die Steuereinheit 4 auch in diesem Fall dafür, daß nach der in der Steuereinheit eingestellten Zeit die vom Flash-Speicher 3 ausgegebenen Daten in das erste Datenregister 6 übernommen werden, die von der Fehlerkorrekturlogik 7 ausgegebenen Daten in das zweite Datenregister 8 übernommen werden, und das Ready-Signal READY an die CPU 1 ausgegeben wird.

Wenn zwischenzeitlich immer noch keine Leseanforderung seitens der CPU 1 aufgetreten ist, bleibt das Flash-Modul 2 stehen und wartet auf die nächste Datenanforderung seitens der CPU 1.

Wenn während des vom Flash-Modul 2 selbständig angestoßenen Zugriffs auf den Flash-Speicher 3 eine Datenanforderung seitens der CPU 1 erfolgt, wird die von der CPU 1 ausgegebene Adresse ADR durch den Vergleicher 12 mit der vom Adressregister 9 ausgegebenen Adresse verglichen, und das Ergebnis des Vergleichs an die Steuereinheit 4 ausgegeben.

Wenn der Steuereinheit 4 signalisiert wird, daß die miteinander verglichenen Adressen gleich sind, wird kein Zugriff auf den Flash-Speicher 3 ausgeführt, um die durch die Leseanforderung der CPU 1 angeforderten Daten auszulesen. Die Übereinstimmung der Adressen zeigt, daß die angeforderten Daten gerade ausgelesen werden oder bereits ausgelesen wurden.

Wenn die angeforderten Daten gerade ausgelesen werden, sorgt die Steuereinheit 3 dafür, daß der Lesevorgang ordnungsgemäß zu Ende geführt wird, und die vom Flash-Speicher 3 ausgegebenen Daten wie vorstehend beschrieben über das erste Datenregister 6, die Fehlerkorrekturlogik 7, und das zweite Datenregister 8 an die CPU 1 ausgegeben werden.

Wenn die angeforderten Daten bereits ausgelesen sind und in das erste Datenregister 6 übernommen wurden, können diese sofort (wenn seit der Übernahme der Daten in das erste Datenregister 6 so viel Zeit vergangen ist, das die Fehlerkorrektur durchgeführt werden konnte) oder kurz danach (nach der Zeit die erforderlich ist, um die begonnene Fehlerkorrektur abzuschließen) in das zweite Datenregister 8 übernommen und an die CPU 1 ausgegeben werden.

In beiden Fällen erhält die CPU 1 die angeforderten Daten schneller als es der Fall wäre, wenn das Auslesen der angeforderten Daten aus dem Flash-Speicher 3 erst nach der Datenforderung durch die CPU 1 begonnen worden wäre.

Wenn der durch den Vergleicher 12 durchgeführte Adressenvergleich ergibt, daß die Adressen nicht übereinstimmen, so sind die Daten, die auf eigene Veranlassung des Flash-Moduls 2 ausgelesen werden oder wurden, nicht die von der CPU 1 angeforderten Daten. Die Steuereinheit 4 ignoriert diese Daten bzw. unterbricht den gerade ausgeführten Zugriff auf den Flash-Speicher 3 und startet einen Zugriff auf den Flash-Speicher, durch welchen die von der CPU 1 angeforderten Daten aus dem Flash-Speicher 3 ausgelesen werden.

Obgleich in diesem Fall eine in geringerem Umfang beschleunigte Bereitstellung der von der CPU 1 angeforderten Daten erzielbar ist, ist bei der in der Figur 1 dargestellten Anordnung die Zeit, die nach einer Anforderung von Daten durch die CPU 1 vergeht, bis dieser die angeforderten Daten zugeführt werden, im Durchschnitt erheblich kürzer als es bei der herkömmlichen Anordnung gemäß Figur 3 der Fall ist.

Eine weitere Möglichkeit zur Verkürzung der Zeit, die zwischen der Anforderung von Daten durch die CPU und die Lieferung dieser Daten an die CPU vergeht, besteht darin, daß bei einem Zugriff auf den Flash-Speicher eine Datenmenge ausgelesen wird, die größer ist als die von der CPU angeforderte Datenmenge, und daß bei nachfolgenden Anforderungen von Daten durch die CPU nach Möglichkeit, d.h., wenn die sich die angeforderten Daten unter den zuvor ausgelesenen Daten befinden, die bereits ausgelesenen Daten an die CPU ausgegeben werden.

Eine Anordnung, die hierzu in der Lage ist, ist in Figur 2 dargestellt und wird nachfolgend unter Bezugnahme darauf beschrieben.

Bei der in der Figur 2 gezeigten Anordnung sind die unter Bezugnahme auf die Figur 1 beschriebene erste Möglichkeit zur Zugriffsbeschleunigung und die nachfolgend beschriebene zweite Möglichkeit zur Zugriffsbeschleunigung kombiniert. Es sei jedoch bereits an dieser Stelle darauf hingewiesen, daß die zweite Möglichkeit auch ohne die erste Möglichkeit zum Einsatz kommen kann, und sich auch ohne die erste Möglichkeit als vorteilhaft erweist.

Die in der Figur 2 gezeigte Anordnung stimmt in weiten Teilen mit der in der Figur 1 gezeigten Anordnung überein; die mit gleichen Bezugszeichen bezeichneten Komponenten sind die gleichen oder einander entsprechende Komponenten und werden zur Vermeidung von Wiederholungen im folgenden nicht nochmals beschrieben.

Die in der Figur 2 gezeigte Anordnung enthält neben den in der Anordnung gemäß Figur 1 gezeigten Komponenten zusätzlich eine Datenzwischenspeichereinheit 13 und einen zweiten Multiplexer 14, wobei die Datenzwischenspeichereinheit 13 ein drittes Datenregister 15, ein zweites Adreßregister 16, einen zweiten Vergleicher 17, und ein Gültigkeits-Flag 18 enthält.

Im betrachteten Beispiel wird die Datenzwischenspeichereinheit 13 "nur" benutzt, wenn die von der CPU 1 angeforderten Daten keine Befehle repräsentierenden Daten sind; für Befehle repräsentierende Daten erfolgen die Zugriffe auf den Flash-Speicher 3 wie vorstehend unter Bezugnahme auf die Figur 1 beschrieben.

Diese Unterscheidung ist im betrachteten Beispiel möglich, weil die Anforderung von Befehle repräsentierenden Daten und die Anforderung von keine Befehle repräsentierenden Daten über zumindest teilweise verschiedene Anschlüsse der CPU 1 erfolgen. Es können jedoch selbstverständlich auch beliebige andere Maßnahmen vorgesehen werden, die erkennen lassen, um welche Art von Daten es sich bei den angeforderten Daten handelt.

Es sei darauf hingewiesen, daß keine zwingende Notwendigkeit besteht, daß Anforderungen von Befehle repräsentierenden Daten und Anforderungen von keine Befehle repräsentierenden Daten unterschiedlich behandelt werden. Wenn die Datenzwischenspeichereinheit 13 sowohl für Anforderungen von Befehle repräsentierenden Daten als auch für Anforderungen von keine Befehle repräsentierenden Daten verwendet werden soll, kann es sich als vorteilhaft erweisen, zwei Datenzwischenspeichereinheiten 13 vorzusehen, wobei die eine Datenzwischenspeichereinheit für Befehle repräsentierende Daten reserviert ist, und wobei die andere Datenzwischenspeichereinheit für keine Befehle repräsentierende Daten reserviert ist. Andererseits könnte aber auch vorgesehen werden, daß die Datenzwischenspeichereinheit 13 ausschließlich für Befehle repräsentierende Daten verwendet wird.

Das Vorsehen einer Datenzwischenspeichereinheit 13 ist nur sinnvoll, wenn die Datenmenge, die in einem Auslesevorgang aus dem Flash-Speicher 3 ausgelesen wird, größer ist als die Datenmenge, die an die CPU 1 weitergeleitet wird. Im betrachteten Beispiel ist es so, daß die Daten aus dem Flash-Speicher 3 in Einheiten von 64 Bits ausgelesen werden, aber - zumindest wenn keine Befehle repräsentierende Daten angefordert sind - pro Datenanforderung nur 16 Bits an die CPU 1 ausgegeben werden.

Wenn die CPU 1 Daten anfordert, die keine Befehle repräsentieren, werden die von der CPU 1 ausgegebene Adresse ADR (über die Adreßeinheit 5), und ein von der Steuereinheit 4 erzeugtes Lesesignal READ an den Flash-Speicher 3 angelegt.

Der Flash-Speicher 3 liest daraufhin die unter der ihm zugeführten Adresse gespeicherten, im betrachteten Beispiel 64 Bits umfassende Daten aus und gibt sie an das erste Datenregister 6 aus. Die Daten werden durch die Fehlerkorrekturlogik 7 bei Bedarf korrigiert und an das zweite Datenregister 8 weitergeleitet. Von den 64 Bits, die dann im zweiten Datenregister 8 gespeichert sind, werden diejenigen 16 Bits, die die CPU 1 angefordert hat, über den zweiten Multiplexer 14 an die CPU 1 ausgegeben. Darüber hinaus werden zumindest die nicht an die CPU 1 ausgegebenen Bits, vorzugsweise aber alle 64 Bits in das dritte Datenregister 15 übernommen. Ferner wird die Adresse, unter welcher die in Rede stehenden Daten im Flash-Speicher 3 gespeichert waren, im zweiten Adreßregister 16 gespeichert.

Wenn die CPU 1 sofort oder später erneut keine Befehle repräsentierende Daten anfordert, wird durch den zweiten Vergleicher 17 überprüft, ob die von der CPU 1 mit der Datenanforderung ausgegebene Adresse ADR mit der im zweiten Adreßregister 16 gespeicherten Adresse übereinstimmt.

Wenn die Adressen übereinstimmen, sind die von der CPU 1 angeforderten Daten im dritten Datenregister 15 gespeichert. Die Steuereinheit 4 veranlaßt in diesem Fall, daß die von der CPU 1 angeforderten Daten aus dem dritten Datenregister 15 über den Multiplexer 14 an die die CPU 1 ausgegeben werden, und unterbricht das gegebenenfalls bereits begonnene erneute Auslesen dieser Daten aus dem Flash-Speicher 3 bzw. ignoriert die aus dem Flash-Speicher 3 erneut ausgelesenen Daten.

Wenn die durch den zweiten Vergleicher 17 verglichenen Adressen nicht übereinstimmen, werden die von der CPU 1 angeforderten Daten durch einen entsprechenden Zugriff auf den Flash-Speicher 3 aus diesem ausgelesen. Mit dem Zugriff auf den Flash-Speicher 3 wird, um keine Zeit zu verlieren, vorzugsweise bereits begonnen, bevor das Vergleichsergebnis feststeht.

Ob auf eine Datenanforderung seitens der CPU 1 hin im dritten Datenregister 15 gespeicherte Daten an die CPU 1 ausgegeben werden, hängt zusätzlich auch vom Inhalt des Gültigkeits-Flags 18 ab. Das Gültigkeits-Flag 18 wird beim Einschreiben von Daten in das dritte Datenregister 15 auf einen bestimmten Wert gesetzt, und behält diesen Wert bei, bis Daten in den Flash-Speicher 3 eingeschrieben werden. Wenn Daten in den Flash-Speicher 3 geschrieben werden, wird der Inhalt des Gültigkeits-Flags 18 verändert. Die Ausgabe von im dritten Datenregister 15 gespeicherten Daten wird nur durchgeführt, wenn das Gültigkeits-Flag 18 seinen anfänglichen Wert aufweist. Dadurch kann verhindert werden, daß aus dem Flash-Modul 2 Daten ausgegeben werden, die nicht mehr mit dem aktuellen Flash-Speicher-Inhalt übereinstimmen könnten.

Es dürfte einleuchten und bedarf keiner näheren Erläuterung, daß durch die Ausgabe von im dritten Datenregister 15 gespeicherten Daten an die CPU 1 erheblich schneller auf Datenanforderungen seitens der CPU 1 reagiert werden kann als es der Fall wäre, wenn die jeweils angeforderten Daten immer aktuell aus dem Flash-Speicher 3 ausgelesen werden müßten.

Insbesondere wenn die CPU 1 gerade keine Befehle repräsentierenden Daten aus dem Flash-Speicher 3 benötigt, kann vorgesehen werden, daß nach dem Auslesen von keine Befehle repräsentierenden Daten aus dem Flash-Speicher 3 sofort die nächsten Daten ausgelesen werden (so wie es unter Bezugnahme auf die Figur 1 für Befehle repräsentierende Daten beschrieben wurde). Diese nächsten Daten können auch schon der Fehlerkorrektur unterzogen werden, und dann im zweiten Datenregister 8 zwischengespeichert werden, bis sie benötigt werden.

Dadurch lassen sich größere Datenmengen noch schneller auslesen.

Derartige Daten-Prefetches werden vorzugsweise nicht automatisch immer durchgeführt, sondern nur nach einer entsprechenden Freigabe durch die CPU 1. D.h., Prefetches werden im Normalfall "nur" für Befehle repräsentierende Daten durchgeführt, und nur in Ausnahmefällen für keine Befehle repräsentierende Daten durchgeführt. Selbstverständilich kann dies auch genau umgekehrt sein.

Die beschriebenen Schnittstellen ermöglichen es unabhängig von den Einzelheiten der praktischen Realisierung, daß die Zeit, die zwischen der Anforderung von Daten durch eine Daten anfordernde Einrichtung aus einer Speichereinrichtung, und der Bereitstellung dieser Daten vergeht, auf sehr einfache Art und Weise und ohne Veränderung der Speichereinrichtung selbst erheblich reduzierbar ist.

### Bezugszeichenliste

- 1: CPU
- 2: Flash-Modul
- 3: Flash-Speicher
- 4: Steuereinrichtung
- 5: Adreßeinheit
- 6: erstes Datenregister
- 7: Fehlerkorrekturlogik
- 8: zweites Datenregister
- 9: Adreßregister
- 10: Multiplexer
- 11: Inkrementierer
- 12: Vergleicher
- 13: Datenzwischenspeichereinheit
- 14: zweiter Multiplexer
- 15: drittes Datenregister
- 16: zweites Adreßregister
- 17: zweiter Vergleicher
- 18: Gültigkeits-Flag
- 101: CPU
- 102: Flash-Modul
- 103: Wait State Generator
- 104: Flash-Speicher
- 105: Fehlerkorrekturlogik

- ADR: Adresse
- DATA: an die CPU ausgegebene Daten
- FLASH DATA: aus dem Flash-Speicher ausgegebene Daten
- READ: Lesesignal
- REQUEST: Leseanforderungssignal

## Patentansprüche

1. Schnittstelle, die dazu ausgelegt ist, zwischen einer Speichereinrichtung (3) und einer Daten aus der Speichereinrichtung anfordernden Einrichtung (1) angeordnet zu werden, wobei die Schnittstelle dazu ausgelegt ist, dafür zu sorgen, daß die angeforderten Daten aus der Speichereinrichtung ausgelesen und an die die Daten anfordernde Einrichtung weitergeleitet werden, wobei die Schnittstelle (4 - 18) dazu ausgelegt ist, dann, wenn nach einem Auslesen von Daten aus der Speichereinrichtung (3) keine weiteren Anforderungen seitens der Daten anfordernden Einrichtung (1) vorliegen, die zuvor zum Auslesen von Daten aus der Speichereinrichtung verwendete Adresse zu modifizieren und das Auslesen der in der Speichereinrichtung unter dieser Adresse gespeicherten Daten zu veranlassen,
**dadurch gekennzeichnet,**
**daß** die Schnittstelle (4 - 18) dazu ausgelegt ist, aus der Speichereinrichtung (3) pro Auslesevorgang eine Datenmenge auszulesen, die größer ist als die von der Daten anfordernden Einrichtung (1) pro Datenanforderung angeforderte Datenmenge, und zumindest Teile der aus der Speichereinrichtung ausgegebenen Daten in einer Zwischenspeichereinrichtung (15) zu speichern.

2. Schnittstelle nach Anspruch 1,
**dadurch gekennzeichnet,**
**daß** die Schnittstelle (4 - 18) dazu ausgelegt ist, die von der Speichereinrichtung (3) ausgegebenen Daten eine vorbestimmte Zeit nach dem Anstoßen des Auslesens der betreffenden Daten zu übernehmen.

3. Schnittstelle nach Anspruch 2,
**dadurch gekennzeichnet,**
**daß** die Schnittstelle (4 - 18) dazu ausgelegt ist, den Zeitpunkt, zu welchem die Schnittstelle (4 - 18) die aus der Speichereinrichtung (3) ausgegebenen Daten übernimmt, unabhängig von einem Signal festzulegen, über welches die Speichereinrichtung signalisiert, daß die von ihr auszugebenden Daten zur Abholung bereitstehen.

4. Schnittstelle nach Anspruch 1,
**dadurch gekennzeichnet,**
**daß** die Schnittstelle (4 - 18) dazu ausgelegt ist, eine in der Schnittstelle festgelegte Zeit nach dem Anstoßen des Auslesens die von der Speichereinrichtung (3) ausgegebenen Daten zu übernehmen und/oder den nächsten Speicherzugriff zu starten.

5. Schnittstelle nach Anspruch 4,
**dadurch gekennzeichnet,**
**daß** die in der Schnittstelle festgelegte Zeit unabhängig von einem Signal festgelegt wird, über welches die Speichereinrichtung signalisiert, daß die von ihr auszugebenden Daten zur Abholung bereitstehen.

6. Schnittstelle nach einem der vorhergehenden Ansprüche,
**dadurch gekennzeichnet,**
**daß** die modifizierte Adresse die auf die zuletzt verwendete Adresse folgende Adresse ist.

7. Schnittstelle nach einem der vorhergehenden Ansprüche,
**dadurch gekennzeichnet,**
**daß** die Schnittstelle (4 - 18) dazu ausgelegt ist, die aus der Speichereinrichtung (3) ausgegebenen Daten in eine weitere Zwischenspeichereinrichtung (6) zu übernehmen, und
**daß** die weitere Zwischenspeichereinrichtung dazu ausgelegt ist, die in ihr gespeicherten Daten direkt oder über weitere Komponenten der Schnittstelle (4 - 18) an die Daten anfordernde Einrichtung (1) auszugeben.

8. Schnittstelle nach Anspruch 7,
**dadurch gekennzeichnet,**
**daß** die weiteren Komponenten eine Fehlerkorrekturlogik (7) umfassen, welche die aus der Speichereinrichtung (3) ausgegebenen Daten einer Fehlerkorrektur unterzieht.

9. Schnittstelle nach Anspruch 8,
**dadurch gekennzeichnet,**
**daß** die weiteren Komponenten eine der Fehlerkorrekturlogik (7) nachgeschaltete zweite weitere Zwischenspeichereinrichtung (8) umfassen.

10. Schnittstelle nach einem der vorhergehenden Ansprüche,
**dadurch gekennzeichnet,**
**daß** die Schnittstelle (4 - 18) dazu ausgelegt ist, der Daten anfordernden Einrichtung (1) durch ein an diese ausgegebenes Signal (READY) zu signalisieren, daß die von ihr angeforderten Daten übernommen werden können.

11. Schnittstelle nach einem der vorhergehenden Ansprüche,
**dadurch gekennzeichnet,**
**daß** die Schnittstelle (4 - 18) dazu ausgelegt ist, dann, wenn sie eine Anforderung seitens der Daten anfordernden Einrichtung (1) erhält, die ihr damit übermittelte Adresse (ADR) mit der Adresse zu vergleichen, unter Verwendung welcher der letzte Zugriff auf die Speichereinrichtung (3) angestoßen wurde.

12. Schnittstelle nach Anspruch 11,
**dadurch gekennzeichnet,**
**daß** die Schnittstelle (4 - 18) dazu ausgelegt ist, dann, wenn die verglichenen Adressen übereinstimmen, die auf den letzten Zugriff auf die Speichereinrichtung (3) hin erhaltenen Daten an die Daten anfordernde Einrichtung (1) auszugeben.

13. Schnittstelle nach Anspruch 11 oder 12,
**dadurch gekennzeichnet,**
**daß** die Schnittstelle dazu ausgelegt ist, dann, wenn die verglichenen Adressen nicht übereinstimmen, die unter der erhaltenen Adresse (ADR) gespeicherten Daten aus der Speichereinrichtung (3) auszulesen und an die Daten anfordernde Einrichtung (1) auszugeben.

14. Schnittstelle nach Anspruch 13,
**dadurch gekennzeichnet,**
**daß** die Schnittstelle (4 - 18) dazu ausgelegt ist, dann, wenn die verglichenen Adressen nicht übereinstimmen, und wenn gerade ein Zugriff auf die Speichereinrichtung (3) durchgeführt wird, durch welchen von der Daten anfordernden Einrichtung (1) nicht angeforderte Daten ausgelesen werden, das Auslesen dieser Daten zu unterbrechen.

15. Schnittstelle nach einem der vorhergehenden Ansprüche,
**dadurch gekennzeichnet,**
**daß** die Schnittstelle (4 - 18) dazu ausgelegt ist, entweder die aus der Speichereinrichtung (3) ausgegebenen oder die in der Zwischenspeichereinrichtung (15) gespeicherten Daten oder Teile derselben an die Daten anfordernde Einrichtung (1) auszugeben.

16. Schnittstelle nach einem der vorhergehenden Ansprüche,
**dadurch gekennzeichnet,**
**daß** die Schnittstelle (4 - 18) eine Adressenspeichereinrichtung (16) enthält, die dazu ausgelegt ist, die Adresse zu speichern, die verwendet wurde, um die in der Zwischenspeichereinrichtung (15) gespeicherten Daten aus der Speichereinrichtung (3) auszulesen.

17. Schnittstelle nach Anspruch 16,
**dadurch gekennzeichnet,**
**daß** die Schnittstelle (4 - 18) dazu ausgelegt ist, dann, wenn sie eine Anforderung seitens der Daten anfordernden Einrichtung (1) erhält, die ihr damit übermittelte Adresse (ADR) mit der in der Adressenspeichereinrichtung (15) gespeicherten Adresse zu vergleichen.

18. Schnittstelle nach Anspruch 17,
**dadurch gekennzeichnet,**
**daß** die Schnittstelle (4 - 18) dazu ausgelegt ist, dann, wenn die verglichenen Adressen übereinstimmen, die in der Zwischenspeichereinrichtung (15) gespeicherten Daten oder einen Teil derselben an die Daten anfordernde Einrichtung (1) auszugeben.

19. Schnittstelle nach Anspruch 17 oder 18,
**dadurch gekennzeichnet,**
**daß** die Schnittstelle (4 - 18) dazu ausgelegt ist, dann, wenn die verglichenen Adressen (ADR) nicht übereinstimmen, die unter der erhaltenen Adresse gespeicherten Daten aus der Speichereinrichtung (3) auszulesen und an die Daten anfordernde Einrichtung (1) auszugeben.

20. Schnittstelle nach einem der vorhergehenden Ansprüche,
**dadurch gekennzeichnet,**
**daß** die Schnittstelle (4 - 18) dazu ausgelegt ist, eine Ausgabe von in der Zwischenspeichereinrichtung (15) gespeicherten Daten an die Daten anfordernde Einrichtung (1) nur erfolgen zu lassen, wenn seit dem Auslesen der in Zwischenspeichereinrichtung gespeicherten Daten aus der Speichereinrichtung (3) keine Daten in die Speichereinrichtung eingeschrieben wurden.

21. Schnittstelle nach einem der vorhergehenden Ansprüche,
**dadurch gekennzeichnet,**
**daß** die Schnittstelle (4 - 18) dazu ausgelegt ist, in der Zwischenspeichereinrichtung (15) nur bestimmte Daten zu speichern.

22. Schnittstelle nach Anspruch 21,
**dadurch gekennzeichnet,**
**daß** die Schnittstelle (4 - 18) dazu ausgelegt ist, in der Zwischenspeichereinrichtung nur keine Befehle repräsentierenden Daten zu speichern.

23. Schnittstelle nach Anspruch 21,
**dadurch gekennzeichnet,**
**daß** die Schnittstelle (4 - 18) dazu ausgelegt ist, in der Zwischenspeichereinrichtung (15) nur Befehle repräsentierenden Daten zu speichern.

24. Schnittstelle nach einem der vorhergehenden Ansprüche,
**dadurch gekennzeichnet,**
**daß** die Schnittstelle (4 - 18) Bestandteil der Speichereinrichtung (3) ist.

25. Schnittstelle nach einem der vorhergehenden Ansprüche,
**dadurch gekennzeichnet,**
**daß** die Schnittstelle (4 - 18) Bestandteil der Daten anfordernden Speichereinrichtung (1) ist.

## Claims

1. Interface which is designed to be arranged between a memory device (3) and a device (1) requesting data from the memory device, the interface being designed to ensure that the requested data is read from the memory device and forwarded to the device requesting the data, if, following the reading of data from the memory device (3), there are no further requests from the device (1) requesting data, the interface (4-18) being designed to modify the address previously used to read data from the memory device and to arrange for the data stored at this address in the memory device to be read, **characterized in that** the interface (4-18) is designed to read an amount of data per read operation which is greater than the amount of data requested by the device (1) requesting data per data request from the memory device (3), and to store at least parts of the data output from the memory device in an intermediate storage device (15).

2. Interface according to Claim 1, **characterized in that**, at a predefined time following the initiation of the read operation, the interface (4-18) is designed to accept the data output by the memory device (3).

3. Interface according to Claim 2, **characterized in that** the interface (4-18) is designed to define the time at which the interface (4-18) accepts the data output from the memory device (3) independently of a signal via which the memory device signals the fact that the data to be output by it is ready to be fetched.

4. Interface according to Claim 1, **characterized in that**, at a time defined in the interface following the initiation of the read operation, the interface (4-18) is designed to accept the data output by the memory device (3) and/or to start the next memory access.

5. Interface according to Claim 4, **characterized in that** the time defined in the interface is defined independently of a signal via which the memory device signals the fact that the data to be output by it is ready to be fetched.

6. Interface according to one of the preceding claims, **characterized in that** the modified address is the address following the address last used.

7. Interface according to one of the preceding claims, **characterized in that** the interface (4-18) is designed to transfer the data output from the memory device (3) into an intermediate storage device (6), and **in that** the further intermediate storage device is designed to output the data stored in it directly or via further components of the interface (4-18) to the device (1) requesting data.

8. Interface according to Claim 7, **characterized in that** the further components comprise error correction logic (7), which subjects the data output from the memory device (3) to error correction.

9. Interface according to Claim 8, **characterized in that** the further components comprise a second further intermediate storage device (8) connected downstream of the error correction logic (7).

10. Interface according to one of the preceding claims, **characterized in that** the interface (4-18) is designed to signal to the device (1) requesting data, by means of a signal (READY) output to the latter, the fact that the data requested by it can be transferred.

11. Interface according to one of the preceding claims, **characterized in that** when it receives a request from the device (1) requesting data, the interface (4-18) is designed to compare the address (ADR) transmitted to it with the address by using which the last access to the memory device (3) was initiated.

12. Interface according to Claim 11, **characterized in that** when the compared addresses agree, the interface (4-18) is designed to output the data obtained in response to the last access to the memory device (3) to the device (1) requesting data.

13. Interface according to Claim 11 or 12, **characterized in that** when the compared addresses do not agree, the interface is designed to read the data stored at the received address (ADR) from the memory device (3) and to output said data to the device (1) requesting data.

14. Interface according to Claim 13, **characterized in that** when the compared addresses do not agree and when an access to the memory device (3) is currently being carried out, by means of which data not requested by the device (1) requesting data is being read, the interface (4-18) is designed to interrupt the reading of this data.

15. Interface according to one of the preceding claims, **characterized in that** the interface (4-18) is designed to output either the data output from the memory device (3) or the data stored in the intermediate storage device (15) or parts of said data to the device (1) requesting data.

16. Interface according to one of the preceding claims, **characterized in that** the interface (4-18) contains an address storage device (16), which is designed to store the address which was used to read the data stored in the intermediate storage device (15) from the memory device (3).

17. Interface according to Claim 16, **characterized in that** when it receives a request from the device (1) requesting data, the interface (4-18) is designed to compare the address (ADR) transmitted to it with said request with the address stored in the address storage device (15).

18. Interface according to Claim 17, **characterized in that** when the compared addresses agree, the interface (4-18) is designed to output the data stored in the intermediate storage device (15) or part of said data to the device (1) requesting data.

19. Interface according to Claim 17 or 18, **characterized in that** when the compared addresses (ADR) do not agree, the interface (4-18) is designed to read the data stored at the received address from the memory device (3) and to output said data to the device (1) requesting data.

20. Interface according to one of the preceding claims, **characterized in that** the interface (4-18) is designed to output data stored in the intermediate storage device (15) to the device (1) requesting data only when no data has been written to the memory device since the action of reading data stored in the intermediate storage device from the memory device (3).

21. Interface according to one of the preceding claims, **characterized in that** the interface (4-18) is designed to store only specific data in the intermediate storage device (15).

22. Interface according to Claim 21, **characterized in that** the interface (4-18) is designed to store only data not representing commands in the intermediate storage device.

23. Interface according to Claim 23, **characterized in that** the interface (4-18) is designed to store only data representing commands in the intermediate storage device (15).

24. Interface according to one of the preceding claims, **characterized in that** the interface (4-18) is a constituent part of the memory device (3).

25. Interface according to one of the preceding claims, **characterized in that** the interface (4-18) is a constituent part of the device (1) requesting data.

## Revendications

1. Interface conçue pour être disposée entre un dispositif de mémorisation (3) et un dispositif demandeur de données (1) auprès du dispositif de mémorisation, l'interface étant conçue pour veiller à ce que les données demandées soient chargées depuis le dispositif de mémorisation et transmises au dispositif demandeur des données, l'interface (4 - 18) étant conçue, en l'absence de nouvelles demandes du côté du dispositif demandeur des données (1) après un chargement des données depuis le dispositif de mémorisation (3), pour modifier l'adresse utilisée précédemment pour charger les données depuis le dispositif de mémorisation et faire en sorte que les données enregistrées sous cette adresse dans le dispositif de mémorisation soient chargées, **caractérisée en ce**
**que** l'interface (4 - 18) est conçue pour charger un volume de données à chaque opération de chargement depuis le dispositif de mémorisation (3), lequel est supérieur au volume de données demandé par le dispositif demandeur des données (1) à chaque demande de données, et pour enregistrer au moins des parties des données chargées depuis le dispositif de mémorisation dans un dispositif de mémorisation temporaire (15).

2. Interface selon la revendication 1, **caractérisée en ce que** l'interface (4 - 18) est conçue pour prendre en charge les données délivrées par le dispositif de mémorisation (3) un certain temps après le déclenchement du chargement des données concernées.

3. Interface selon la revendication 2, **caractérisée en ce que** l'interface (4 - 18) est conçue pour définir l'instant auquel l'interface (4 - 18) prend en charge les données délivrées par le dispositif de mémorisation (3) indépendamment d'un signal par le biais duquel le dispositif de mémorisation signale que les données qu'il doit délivrer sont disponibles pour être récupérées.

4. Interface selon la revendication 1, **caractérisée en ce que** l'interface (4 - 18) est conçue pour prendre en charge les données délivrées par le dispositif de mémorisation (3) et/ou pour démarrer le prochain accès à la mémoire à un temps fixé dans l'interface après le déclenchement du chargement.

5. Interface selon la revendication 4, **caractérisée en ce que** le temps fixé dans l'interface est fixé indépendamment d'un signal par le biais duquel le dispositif de mémorisation signale que les données qu'il doit délivrer sont disponibles pour être récupérées.

6. Interface selon l'une des revendications précédentes, **caractérisée en ce que** l'adresse modifiée est l'adresse qui suit la dernière adresse utilisée.

7. Interface selon l'une des revendications précédentes, **caractérisée en ce que** l'interface (4 - 18) est conçue pour prendre en charge les données délivrées par le dispositif de mémorisation (3) dans un dispositif de mémorisation temporaire (6) supplémentaire, et **en ce que** le dispositif de mémorisation temporaire supplémentaire est conçu pour délivrer les données enregistrées dans celui-ci directement ou par le biais d'autres composants de l'interface (4 - 18) au dispositif demandeur des données (1).

8. Interface selon la revendication 7, **caractérisée en ce que** les autres composants comprennent une logique de correction d'erreurs (7) qui soumet les données délivrées par le dispositif de mémorisation (3) à une correction des erreurs.

9. Interface selon la revendication 8, **caractérisée en ce que** les autres composants comprennent un deuxième dispositif de mémorisation temporaire supplémentaire (8) branché à la suite de la logique de correction d'erreurs (7).

10. Interface selon l'une des revendications précédentes, **caractérisée en ce que** l'interface (4 - 18) est conçue pour signaler au dispositif demandeur des données (1) par un signal (READY) délivré à celui-ci que les données qu'il a demandées peuvent être prises en charge.

11. Interface selon l'une des revendications précédentes, **caractérisée en ce que** l'interface (4 - 18) est conçue, lorsqu'elle reçoit une demande du côté du dispositif demandeur des données (1), pour comparer l'adresse (ADR) qui lui est ainsi communiquée avec l'adresse qui a été utilisée pour le déclenchement du dernier accès au dispositif de mémorisation (3).

12. Interface selon la revendication 11, **caractérisée en ce que** l'interface (4 - 18) est conçue pour, lorsque les adresses comparées coïncident, délivrer au dispositif demandeur des données (1) les données obtenues lors du dernier accès au dispositif de mémorisation (3).

13. Interface selon la revendication 11 ou 12, **caractérisée en ce que** l'interface est conçue, lorsque les adresses comparées ne coïncident pas, pour charger depuis le dispositif de mémorisation (3) les données enregistrées sous l'adresse (ADR) obtenues et les délivrer au dispositif demandeur des données (1).

14. Interface selon la revendication 13, **caractérisée en ce que** l'interface (4 - 18) est conçue, lorsque les adresses comparées ne coïncident pas et lorsqu'un accès au dispositif de mémorisation (3) est en train d'avoir lieu par lequel ce ne sont pas les données demandées par le dispositif demandeur des données (1) qui sont chargées, pour interrompre le chargement de ces données.

15. Interface selon l'une des revendications précédentes, **caractérisée en ce que** l'interface (4 - 18) est conçue pour délivrer au dispositif demandeur des données (1) soit les données délivrées depuis le dispositif de mémorisation (3), soit celles enregistrées dans le dispositif de mémorisation temporaire (15), soit des parties de celles-ci.

16. Interface selon l'une des revendications précédentes, **caractérisée en ce que** l'interface (4 - 18) contient un dispositif de mémorisation d'adresses (16) qui est conçu pour enregistrer l'adresse qui a été utilisée pour charger depuis le dispositif de mémorisation (3) les données enregistrées dans le dispositif de mémorisation temporaire (15).

17. Interface selon la revendication 16, **caractérisée en ce que** l'interface (4 - 18) est conçue, lorsqu'elle reçoit une demande de la part du dispositif demandeur des données (1), pour comparer l'adresse (ADR) qui lui est communiquée avec celle-ci avec l'adresse enregistrée dans le dispositif de mémorisation d'adresses (16).

18. Interface selon la revendication 17, **caractérisée en ce que** l'interface (4 - 18) est conçue, lorsque les adresses comparées coïncident, pour délivrer au dispositif demandeur des données (1) les données enregistrées dans le dispositif de mémorisation temporaire (15) ou une partie de celles-ci.

19. Interface selon la revendication 17 ou 18, **caractérisée en ce que** l'interface (4 - 18) est conçue, lorsque les adresses (ADR) comparées ne coïncident pas, pour charger les données enregistrées sous l'adresse obtenue depuis le dispositif de mémorisation (3) et les délivrer au dispositif demandeur des données (1).

20. Interface selon l'une des revendications précédentes, **caractérisée en ce que** l'interface (4 - 18) est conçue pour ne laisser avoir lieu une délivrance des données enregistrées dans le dispositif de mémorisation temporaire (15) au dispositif demandeur des données (1) que lorsqu'aucune donnée n'a été écrite dans le dispositif de mémorisation depuis le chargement des données enregistrées dans le dispositif de mémorisation temporaire depuis le dispositif de mémorisation (3).

21. Interface selon l'une des revendications précédentes, **caractérisée en ce que** l'interface (4 - 18) est conçue pour n'enregistrer que certaines données dans le dispositif de mémorisation temporaire (15).

22. Interface selon la revendication 21, **caractérisée en ce que** l'interface (4 - 18) est conçue pour n'enregistrer dans le dispositif de mémorisation temporaire que les données qui ne représentent pas des instructions.

23. Interface selon la revendication 21, **caractérisée en ce que** l'interface (4 - 18) est conçue pour n'enregistrer dans le dispositif de mémorisation temporaire (15) que les données qui représentent des instructions.

24. Interface selon l'une des revendications précédentes, **caractérisée en ce que** l'interface (4 - 18) est un composant du dispositif de mémorisation (3).

25. Interface selon l'une des revendications précédentes, **caractérisée en ce que** l'interface (4 - 18) est un composant du dispositif de mémorisation demandeur des données (1).
